# EUROPÄISCHE PATENTSCHRIFT

(11) **EP 1 842 384 B1**
(45) Veröffentlichungstag und Bekanntmachung des Hinweises auf die Patenterteilung: **26.05.2010**
(21) Anmeldenummer: 06700490.3
(22) Anmeldetag: 17.01.2006
(51) Int. Cl.: H04L 29/06

(54) **TEILNEHMERKARTE BEI INTERNET WEBLOG DIENSTEN**
SUBSCRIBER CARD FOR INTERNET WEB LOG SERVICES
CARTE D'ABONNE POUR SERVICES INTERNET DE BLOG

(30) Priorität: 19.01.2005 DE 102005002521
(43) Veröffentlichungstag der Anmeldung: 10.10.2007
(73) Patentinhaber: Giesecke & Devrient GmbH, 81677 München (DE)
(72) Erfinder: GERSTENBERGER, Volker, 85435 Erding (DE)
(74) Vertreter: Metzler, Volker
(86) Internationale Anmeldenummer: PCT/EP2006/000367
(87) Internationale Veröffentlichungsnummer: WO 2006/077075

(56) Entgegenhaltungen:
- WO-A-02/19593
- WO-A-03/077140
- WO-A-2004/102855
- US-A1- 2004 137 921
- JOKELA T: "Authoring tools for mobile multimedia content" MULTIMEDIA AND EXPO, 2003. PROCEEDINGS. 2003 INTERNATIONAL CONFERENCE ON 6-9 JULY 2003, PISCATAWAY, NJ, USA,IEEE, Bd. 2, 6. Juli 2003 (2003-07-06), Seiten 637-640, XP010650636 ISBN: 0-7803-7965-9

## Beschreibung

Die Erfindung betrifft eine Teilnehmerkarte, mit einem darin implementierten Sicherheitsmodul zur Verwendung bei der Mobiltelefonie mit einem mobilen Endgerät in einem Mobilfunksystem, und genauer eine solche Teilnehmerkarte im Zusammenhang mit Internet Weblog Diensten.

Mobile Endgeräte - wie z.B. Mobiltelefone, Smart Phones oder PDAs (Personal Digital Assistants) mit Mobiltelefonfunktion - werden üblicherweise mit einer Teilnehmerkarte betrieben, einer spezifisch eingerichteten Mikroprozessorchipkarte. Beispiele für Mobilfunksysteme sind GSM (Global System for Mobile Communications), UMTS (Universal Mobile Telecommunications System), IMT-2000 (International Mobile Communication 2000). Herzstück der Teilnehmerkarte ist das Sicherheitsmodul, das Identitätsdaten enthält, wie beispielsweise die IMSI und den Authentisierungsschlüssel Ki, die für die Teilnehmerkarte und damit indirekt für den Nutzer der Teilnehmerkarte bzw. des damit betriebenen mobilen Endgeräts spezifisch sind. Im GSM-Mobilfunksystem ist das Sicherheitsmodul als SIM (SIM = Subscriber Identity Module) bezeichnet, im UMTS-Mobilfunksystem als USIM (USIM = Universal SIM). Die Teilnehmerkarte wird in diesen Fällen häufig als (U)SIM-Karte bezeichnet. Beim Betrieb eines mobilen Endgeräts mit Teilnehmerkarte in einem Mobilfunknetzwerk werden die Identitätsdaten im Sicherheitsmodul der Teilnehmerkarte dazu verwendet, das mobile Endgerät gegenüber dem Mobilfunknetzwerk oder dem Hintergrundsystem, in dem die Identitätsdaten aller Nutzer gesammelt gespeichert sind, zu authentisieren.

In dem meisten Teilnehmerkarten ist zudem ein sogenanntes Card Application Toolkit implementiert, mit dem die Teilnehmerkarte mittels einer Reihe von vorgefertigten Kommandos auf Funktionalitäten des mobilen Endgeräts, mit dem die Teilnehmerkarte betrieben wird, direkt zugreifen kann. Im GSM-Mobilfunksystem ist das Card Application Toolkit beispielsweise als SIM Application Toolkit bezeichnet und in der Norm GSM 11.14 genauer beschrieben. Die vorgefertigten Kommandos werden auch als proaktive Kommandos bezeichnet.

Seit einiger Zeit finden im Internet sogenannte Weblog Dienste oder - gleichbedeutend - Blogging Dienste zunehmende Verbreitung. Bei einem Weblog Dienst bietet ein Betreiber einer Internet-Präsenz registrierten Nutzern die Möglichkeit, innerhalb der Internet-Präsenz eigene Inhalte einzustellen und anderen Internet-Nutzern zur Verfügung zu stellen. Unter der Internet-Präsenz des Betreibers wird eine beliebig strukturierte Internet-Seite oder beliebig, z.B. hierarchisch, geordnete Anordnung von miteinander verbundenen Internet-Seiten verstanden, die unter der Hoheit des Betreibers stehen, vergleichbar mit einer Homepage. Ein Interessent für den Weblog Dienst muss sich zunächst beim Betreiber registrieren lassen. Daraufhin wird seitens des Betreibers für den registrierten Nutzer ein Benutzerkonto eingerichtet, der sogenannte Weblog. Von dem Benutzerkonto (Weblog) aus kann der registrierte Nutzer Inhalte in die Internet-Präsenz des Betreibers einstellten. Von seinem Benutzerkonto aus kann der registrierte Nutzer zudem durch Eingaben innerhalb der Internet-Präsenz mit weiteren registrierten Nutzer in Kontakt treten, z.B. über in der Internet-Präsenz angezeigte Links.

Durch Weblog Dienste werden beispielsweise Diskussiönsforen bereitgestellt, in denen registrierte Nutzer eigene Beiträge einstellen können und Beiträge anderer registrierter Nutzer kommentieren können. Ein rein lesender Zugriff auf einige oder alle der eingestellten Inhalte innerhalb der Internet-Präsenz ist typischerweise auch für beliebige, nicht beim Betreiber des Weblog Dienstes registrierte Nutzer möglich. Ein typisches Beispiel für einen Weblog Dienst findet sich unter der Internet-Adresse "www.blogall.de".

Um auf sein Benutzerkonto beim Weblog Dienst zugreifen zu können, benötigt ein Nutzer einen Computer (z.B. PC oder Notebook) mit einem Internetanschluss. Im einfachsten Fall wird auf bekanntem Wege über eine Festnetz-Telefonverbindung eine Verbindung des Computers ins Internet hergestellt. Die Internet-Verbindung über das Festnetz kann mit einer Reihe von an sich bekannten Sicherungsmaßnahmen wie Verschlüsselung, Firewalls etc. abgesichert sein. Die Verbindung ins Internet über eine Festnetzleitung hat den Nachteil, dass sie an den stationären Standort des genutzten Computers und Festnetzanschlusses gebunden ist und z.B. auf Reisen nicht nutzbar ist.

Die WO 02/195923 A2 beschreibt eine Teilnehmerkarte mit einem Sicherheitsmodul zur Verwendung bei der Mobiltelefonie, wobei in der Teilnehmerkarte eine SIM Application Toolkit Applikation implementiert ist, mit der Operationen im Zusammenhang der Authentisierung des Mobiltelefons durchführbar sind.

Aus der WO 2004/102855 A2 ist die Nutzung eines Weblog-Systems mittels eines Mobiltelefons bekannt.

Darüber hinaus offenbart die WO 03/077140 A1 die Nutzung eines Weblogs unter Verwendung eines Mobiltelefons, wobei in der SIM-Teilnehmerkarte eine Weblog-Schnittstelle implementiert ist.

Mit einem WAP-fähigen (WAP = wireless application protocol) mobilen. Endgerät (z.B. Mobiltelefon) kann der Nutzer zudem mittels des mobilen Endgeräts über eine Mobilfunkverbindung auf das Internet zugreifen. Damit ein mobiles Endgerät WAP-fähig ist, ist in ihm eine WAP Infrastruktur mit einem von dem Sicherheitsmodul für Mobiltelefonie zumindest logisch gesonderten zusätzlichen Sicherheitsmodul, der sogenannten WIM (Wireless Identification Module) implementiert. Logisch ist die WIM von Sicherheitsmodul für Mobiltelefonie (z.B. SIM oder USIM) völlig getrennt. So hat die WIM beispielsweise eigene Identitätsdaten z.B. für die Authentisierung des mobilen Endgeräts gegenüber dem Hintergrundsystem oder Netzwerk, mit dem Kontakt aufgenommen werden soll. Die WIM-Identitätsdaten sind von den Identitätsdaten des Sicherheitsmoduls für herkömmliche Mobiltelefonie (z.B. SIM oder USIM) vollständig gesondert. Somit hat ein WAP-fähiges mobiles Endgerät zwei vollständige und voneinander zumindest logisch gesonderte Sicherheitsmodule. Körperlich kann die WIM wahlweise in einer gesonderten Chipkarte implementiert sein oder alternativ in der ohnehin vorgesehenen Teilnehmerkarte (mit z.B. SIM-Karte oder USIM-Karte) implementiert sein, je nachdem, ob ein Mobiltelefon mit ein oder zwei Kartenschlitzen verwendet wird. Eine Großzahl der aktuell in Gebrauch befindlichen mobilen Endgeräte hat allerdings keine solche WAP Infrastruktur mit zwei gesonderten Sicherheitsmodulen WIM und herkömmlichem Sicherheitsmodul (z.B. SIM oder USIM) und damit keine Möglichkeit über eine WAP-Verbindung das Internet zu nutzen.

Aufgabe der Erfindung ist es, eine Teilnehmerkarte mit einem darin implementierten Sicherheitsmodul zur Verwendung bei der Mobiltelefonie mit einem mobilen Endgerät in einem Mobilfunksystem zu schaffen, die es ermöglicht, mit einem Mobiltelefon ein Benutzerkonto bei einem Weblog Dienst auf einfache, effiziente uns zugleich sichere Weise zu nutzen.

Die Aufgabe wird durch eine Teilnehmerkarte nach Anspruch 1 gelöst.

In der Teilnehmerkarte gemäß dem unabhängigen Anspruch 1 ist ein Sicherheitsmodul zur Verwendung bei der Mobiltelefonie mit einem mobilen Endgerät in einem Mobilfunksystem implementiert, wie z.B. eine herkömmliche SIM oder USIM. Gemäß der Erfindung ist in der Teilnehmerkarte weiter eine Weblog Applikation implementiert, mit der ein Benutzerkonto bei einem Weblog Dienst im Zusammenwirken mit dem Sicherheitsmodul für Mobiltelefonie (z.B. SIM, USIM) nutzbar ist.

Mit der Weblog Applikation kann ein registrierter Nutzer bei einem Weblog Dienst im Internet sein Benutzerkonto gesichert führen, ohne dass dazu, wie beim Stand der Technik, eine vollständige WIM erforderlich wäre. Die Weblog Applikation greift bedarfsweise auf Funktionalitäten des Sicherheitsmoduls (z.B. SIM, USIM) zu und braucht daher die Funktionalitäten nicht selbst bereitzustellen. Die Weblog Applikation kann zudem einfach vom mobilen Endgerät aus betätigt werden.

Daher ist gemäß Anspruch 1 eine Teilnehmerkarte geschaffen, die es ermöglicht, mit einem Mobiltelefon ein Benutzerkonto bei einem Weblog Dienst auf einfache, effiziente und zugleich sichere Weise zu nutzen.

Das Nutzen des Benutzerkontos kann wahlweise ein Verarbeiten - insbesondere Lesen und/oder Erstellen und/oder Einstellen und/oder Ändern und/oder Kommentieren - von Einträgen in einer Internet-Präsenz unter dem Weblog Dienst umfassen.

Gemäß einer bevorzugten Ausführungsform umfasst das Zusammenwirken der Weblog Applikation mit dem Sicherheitsmodul für Mobiltelefonie, dass die Weblog Applikation derart eingerichtet ist, dass zur Authentisierung der Teilnehmerkarte oder des mobilen Endgeräts Authentisierungsdaten - insbesondere Identitätsdaten und/oder Authentisierungsalgorithmen - des Sicherheitsmoduls verwendet werden. Bei dieser bevorzugten Ausführungsform braucht die Weblog Applikation also insbesondere keine Authentisierungsdaten wie z.B. Identitätsdaten (z.B. IMSI, Ki) und Authentisierungsalgorithmen bereitzustellen. Die Weblog Applikation kann, um eine Authentisierung durchzuführen, Authentisierungsdaten des Sicherheitsmoduls (z.B. SIM oder USIM) nutzen. Daher ist die Teilnehmerkarte gemäß der bevorzugten Ausführungsform besonders effizient.

Wahlweise ist die Weblog Applikation als Card Application Toolkit Applikation gestaltet. Bei einer Teilnehmerkarte mit einem Sicherheitsmodul in Gestalt einer SIM ist die Weblog Applikation also beispielsweise als SIM Application Toolkit Applikation gestaltet. Wahlweise ist die Weblog Applikation als Java Applet gestaltet.

Vorzugsweise ist die Weblog Applikation dazu eingerichtet, durch das mobile Endgerät bereitgestellte Datensätze direkt an den Weblog Dienst bereitzustellen, insbesondere direkt in die Internet-Präsenz unter dem Weblog Dienst einzustellen. Die Datensätze können insbesondere mittels eines Kurznachrichtendienstes, insbesondere SMS und/oder MMS an den Weblog Dienst bereitstellbar sein.

Ein Mobilsystem gemäß der Erfindung weist ein mobiles Endgerät und eine Teilnehmerkarte wie die oben beschriebene auf. Das mobile Endgerät kann insbesondere eine Digitalkamera aufweisen, insbesondere ein Kamera-Mobiltelefon sein. Mit dem Mobilsystem mit einem Endgerät mit Digitalkamera kann ein Nutzer vorzugsweise von seinem Benutzerkonto bei dem Weblog Dienst aus ein mit der Digitalkamera aufgenommenes Bild unter Verwendung der Weblog Applikation direkt in die Internet-Präsenz unter dem Weblog Dienst einstellen.

Im folgenden wird die Erfindung an Hand von Ausführungsbeispielen und unter Bezugnahme auf die Zeichnung näher erläutert, in der zeigen:
- Fig.1: einen Ausschnitt aus einer beispielhaften, auf einem Computerbild- schirm angezeigten Internet-Präsenz unter einem Benutzerkonto eines Weblog Dienstes;
- Fig. 2: ein beispielhaftes, auf dem Display eines Mobiltelefons angezeigtes Eingabemenü, mit dem die erfindungsgemäße Weblog Applikation bedienbar ist, mit der wiederum eine Nutzung eines Benutzerkontos "Blog" bei einem Weblog Dienst ermöglicht ist.

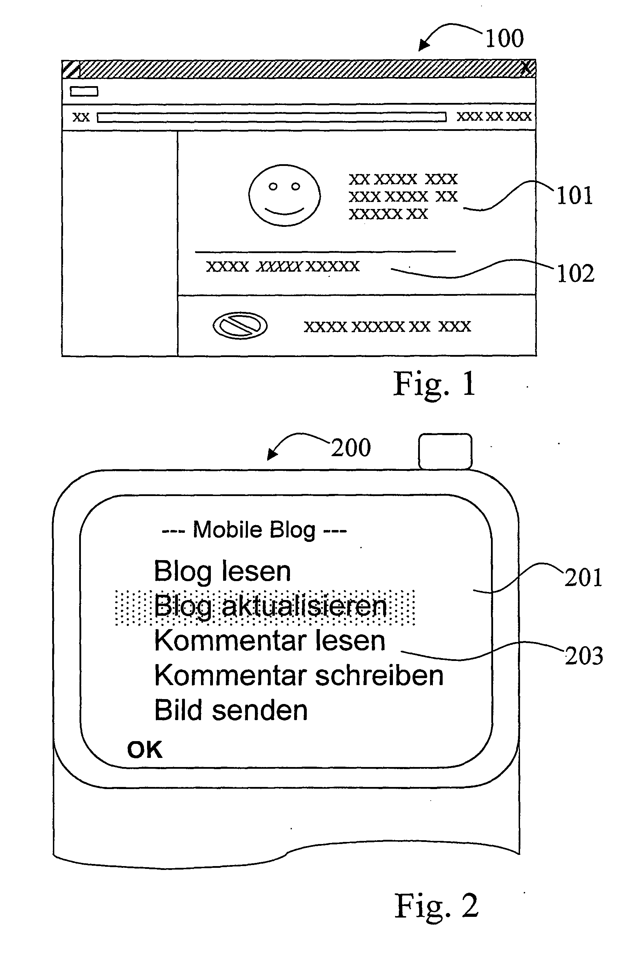

Fig.1 zeigt einen Ausschnitt aus einer beispielhaften, auf einem Computerbildschirm 100 angezeigten Internet-Präsenz unter einem Benutzerkonto eines Weblog Dienstes. In der Internet-Präsenz sind Inhalte 101 von Nutzern eingestellt. Die Inhalte 101 können von registrierten Nutzern, die ein Benutzerkonto (d.h. eine Weblog) haben, und von nicht registrierten Besuchern der Internet-Präsenz gleichermaßen gelesen werden. Dagegen können Inhalte 101 nur von registrierten Nutzern, von ihrem jeweiligen Benutzerkonto (Blog) aus erstellt, in die Internet-Präsenz eingestellt, geändert, gelöscht oder sonstwie bearbeitet werden. In der Internet-Präsenz sind weiter Verknüpfungen (Links) 102 zu registrierten Nutzern vorgesehen. In der Regel ist eine Verknüpfung (ein Link) 102 demjenigen Nutzer zugeordnet, der den räumlich zugeordneten, z.B. darüber stehenden, Inhalt 101 in die Internet-Präsenz eingestellt hat. Ein registrierter Nutzer, der in sein Benutzerkonto eingebucht ist, kann durch Aktivieren eines Links 102 den Eintrag 101 des anderen Nutzers, zu dem der Link 102 gehört, kommentieren, z.B. mit einem eigenen Eintrag 101, oder an den anderen Nutzer ein E-Mail senden oder sonstwie in direkten Kontakt treten.

Fig. 2 zeigt ein beispielhaftes, auf dem Display 201 eines Mobiltelefons 200 angezeigtes Eingabemenü 203, mit dem die erfindungsgemäße Weblog Applikation bedienbar ist, mit der wiederum eine Nutzung eines Benutzerkontos "Blog" bei einem Weblog Dienst ermöglicht ist. In das Mobiltelefon 200 ist auf übliche Weise eine Teilnehmerkarte eingesetzt (nicht dargestellt). In der Teilnehmerkarte ist die erfindungsgemäße Weblog Applikation als SIM Application Toolkit Applikation implementiert. Die Weblog Applikation ermöglicht hierdurch insbesondere eine wunschgemäße Steuerung des Display 201, z.B. mit proaktiven Kommandos aus dem SIM Application Toolkit wie z.B. "DISPLAY TEXT" etc.. In Fig. 2 sind im Eingabemenü 203 folgende Eingabemöglichkeiten angezeigt. "Blog lesen" ("Read Blog"), womit der Nutzer eines Benutzerkontos bei einem Weblog Dienst einen lesenden Zugriff auf sein Benutzerkonto vornehmen kann. Mit "Blog Lesen" kann der Nutzer z.B. Inhalte 101 wie die in Fig. 1 gezeigten lesen. Mit "Blog aktualisieren" ("Update Blog") kann ein Nutzer Änderungen an eigenen Inhalten in einer Internet-Präsenz von seinem Benutzerkonto aus vornehmen. Mit "Kommentar lesen" ("Read Comment") kann ein Kommentar gelesen werden, mit "Kommentar schreiben" ("Write Comment") ein Kommentar zu einem Inhalt eines anderen Nutzers erstellt werden. Mit "Bild senden" ("Send Picture") kann ein Nutzer ein Digitalbild, das er mit der in seinem Mobiltelefon integrierten Kamera aufgenommen hat, an einen zuvor ausgewählten Ort in der Internet-Präsenz senden und an dem Ort zur Anzeige bringen, so dass andere Nutzer das Digitalbild betrachten können.

## Patentansprüche

1. Teilnehmerkarte, mit einem darin implementierten Sicherheitsmodul zur Verwendung bei der Mobiltelefonie mit einem mobilen Endgerät in einem Mobilfunksystem, in welcher Teilnehmerkarte weiter eine Weblog Applikation implementiert ist, mit der ein Benutzerkonto bei einem Weblog Dienst im Zusammenwirken mit dem Sicherheitsmodul für Mobiltelefonie nutzbar ist, wobei das Zusammenwirken der Weblog Applikation mit dem Sicherheitsmodul für Mobiltelefonie umfasst, dass die Weblog Applikation derart eingerichtet ist, dass zur Authentisierung der Teilnehmerkarte oder des mobilen Endgeräts für die Weblog Applikation Authentisierungsdaten - insbesondere Identitätsdaten und/oder Authentisierungsalgorithmen - des Sicherheitsmoduls verwendet werden.

2. Teilnehmerkarte nach Anspruch 1, wobei das Nutzen des Benutzerkontos ein Verarbeiten - insbesondere Lesen und/ oder Erstellen und/ oder Einstellen und/ oder Ändern und/ oder Kommentieren - von Einträgen in einer Internet-Präsenz unter dem Weblog Dienst umfasst.

3. Teilnehmerkarte nach einem der Ansprüche 1 bis 2, wobei die Weblog Applikation als Card Application Toolkit Applikation gestaltet ist.

4. Teilnehmerkarte nach einem der Ansprüche 1 bis 2, wobei die Weblog Applikation als Java Applet gestaltet ist.

5. Teilnehmerkarte nach einem der Ansprüche 1 bis 4, wobei die Weblog Applikation dazu eingerichtet ist, durch das mobile Endgerät bereitgestellte Datensätze direkt an den Weblog Dienst bereitzustellen, insbesondere direkt in die Internet-Präsenz unter dem Weblog Dienst einzustellen.

6. Teilnehmerkarte nach Anspruch 5, wobei die Datensätze mittels eines Kurznachrichtendienstes, insbesondere SMS und/oder MMS an den Weblog Dienst bereitstellbar sind.

7. Mobil-System bestehend aus einem mobilen Endgerät und einer Teilnehmerkarte nach einem der Ansprüche 1 bis 6.

## Claims

1. A subscriber card, having a security module implemented therein for use in mobile telephony with a mobile terminal in a mobile communication system, in which subscriber card there is further implemented a web log application with which a user account is utilizable in a web log service in interaction with the security module for mobile telephony, wherein the interaction of the web log application with the security module for mobile telephony comprises that the web log application is set up such that authentication data - in particular identity data and/or authentication algorithms - of the security module are employed for authentication of the subscriber card or the mobile terminal for the web log application.

2. The subscriber card according to claim 1, wherein the utilization of the user account comprises a processing - in particular reading and/or creation and/or posting and/or amendment and/or commenting - of entries in an Internet presence under the web log service.

3. The subscriber card according to either of claims 1 to 2, wherein the web log application is designed as a Card Application Toolkit application.

4. The subscriber card according to either of claims 1 to 2, wherein the web log application is designed as a Java applet.

5. The subscriber card according to any of claims 1 to 4, wherein the web log application is set up to directly supply data records supplied by the mobile terminal to the web log service, in particular to directly post them on the Internet presence under the web log service.

6. The subscriber card according to claim 5, wherein the data records are suppliable to the web log service by means of a short messaging service, in particular SMS and/or MMS.

7. A mobile system consisting of a mobile terminal and a subscriber card according to any of claims 1 to 6.

## Revendications

1. Carte d'abonné, avec un module de sécurité y étant implémenté pour utilisation lors de la téléphonie mobile avec un terminal mobile dans un système de radiocommunication mobile, carte d'abonné dans laquelle est en outre implémentée une application Weblog avec laquelle un compte d'abonné entretenu auprès d'un service Weblog est exploitable en concomitance avec le module de sécurité pour téléphonie mobile, la concomitance de l'application Weblog avec le module de sécurité pour téléphonie mobile englobant le fait que l'application Weblog est configurée de telle manière que, pour l'authentification de la carte d'abonné ou du terminal mobile pour l'application Weblog, des données d'authentification - notamment des données d'identité et/ou des algorithmes d'authentification - du module de sécurité sont utilisées.

2. Carte d'abonné selon la revendication 1, l'exploitation du compte d'abonné englobant un traitement - notamment lecture et/ou élaboration et/ou réglage et/ou modification et/ou annotation - d'entrées dans une présence Internet sous le service Weblog.

3. Carte d'abonné selon une des revendications de 1 à 2, l'application Weblog étant réalisée sous forme d'application Card Application Toolkit.

4. Carte d'abonné selon une des revendications de 1 à 2, l'application Weblog étant réalisée sous forme de Java Applet.

5. Carte d'abonné selon une des revendications de 1 à 4, l'application Weblog étant configurée pour à mettre directement à disposition au service Weblog des jeux de données mis à disposition par le terminal mobile, notamment pour les mettre dans la présence Internet sous le service Weblog.

6. Carte d'abonné selon la revendication 5, les jeux de données pouvant être mis à disposition au service Weblog par l'intermédiaire d'un service de messages courts, notamment SMS et/ou MMS.

7. Système de mobile consistant en un terminal mobile et en une carte d'abonné selon une des revendications de 1 à 6.
